Europäisches Patentamt

European Patent Office

Office européen des brevets

(19)

(11) Numéro de publication : **0 354 118 B1**

(12) # FASCICULE DE BREVET EUROPEEN

(45) Date de publication du fascicule du brevet :
03.02.93 Bulletin 93/05

(51) Int. Cl.⁵ : **A23L 1/221**

(21) Numéro de dépôt : **89402188.0**

(22) Date de dépôt : **02.08.89**

(54) **Procédé d'obtention d'arôme naturel de vanille par traitement des gousses de vanille verte et arôme obtenu.**

Le dossier contient des informations techniques présentées postérieurement au dépôt de la demande et ne figurant pas dans leprésent fascicule.

(30) Priorité : **03.08.88 FR 8810473**

(43) Date de publication de la demande :
**07.02.90 Bulletin 90/06**

(45) Mention de la délivrance du brevet :
**03.02.93 Bulletin 93/05**

(84) Etats contractants désignés :
**BE DE ES FR GB IT NL**

(56) Documents cités :
**EP-A- 0 075 134
FR-A- 1 031 447
FOOD RESEARCH, vol. 8, 1943, pages 343-351;
F.E. ARANA: "Action of a beta-geucocisudase
in the curing of vanilla"**

(73) Titulaire : **SOCIETE NATIONALE ELF
AQUITAINE
Tour Elf, 2, Place de la Coupole, La Défense 6
F-92400 Courbevoie (FR)**

(72) Inventeur : **Ansaldi, Gwenaele
32bis, rue Max Dormoy
F-13004 Marseille (FR)**
Inventeur : **Gil, Gérard
Chemin de la Louve
F-13400 Aubagne (FR)**
Inventeur : **Le Petit, Jean
Résidence Chappe Bât. 7
D-13190 Allauch (FR)**

(74) Mandataire : **Gillard, Marie-Louise et al
Cabinet Beau de Loménie 55, Rue
d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 354 118 B1

## Description

La présente invention concerne un procédé d'obtention d'un arôme vanille par traitement des gousses de vanille vertes et l'arôme obtenu.

Les constituants de l'arôme vanille notamment la vanilline, l'acide vanillique, l'acide para-hydroxybenzoïque et l'aldéhyde para-hydroxybenzoïque sont pratiquement absents de la gousse verte mature au moment de la récolte, et se forment lentement dans la gousse après la cueillette.

On sait qu'actuellement, de façon classique, les gousses fraîchement récoltées subissent successivement :

- un échaudage, c'est-à-dire une immersion pendant 3 minutes dans l'eau à 65°C,
- un étuvage, pendant lequel les gousses sont placées dans des caisses capitonnées de laine où elles perdent en 48 h, à 30-40°C, leur eau et prennent leur couleur brune,
- un séchage, en trois étapes successives, qui consiste à maintenir 3 heures par jour, pendant 7 jours, les gousses dans un four à 65°C, puis à les exposer au soleil, 3 à 5 heures par jour pendant 7 jours et enfin à les conserver à l'ombre, en local aéré, pendant un mois.

et enfin,

- une maturation finale, qui dure 8 mois, dans des enceintes fermées.

Au cours de la dernière étape, l'état des gousses est contrôlé chaque semaine et celles, relativement nombreuses, qui présentent en surface un développement mycélien sont éliminées, ce qui augmente le coût du traitement.

Par ce traitement, long et qui implique de nombreuses manipulations, on obtient, selon les lots de gousses et leur origine, entre 2 et 3 grammes de vanilline pour 100 g de matière sèche de gousses vertes matures.

F.E. ARANA dans Food Research 8 p.343-351 (1943) a indiqué que la vanilline formée au cours de la maturation des gousses, résulte de l'hydrolyse d'un glucoside, qui se trouve dans la gousse verte ; ce glucoside peut être extrait de la gousse par l'éthanol, et hydrolysé soit par une B-glucosidase, soit par un acide en milieu aqueux. Bien que dans le procédé classique, il ne reste plus de glucovanilline dans la gousse traitée, la quantité de vanilline présente en fin de traitement est inférieure à celle que l'on pourrait escompter sur la base de la quantité de glucoside présente à la cueillette : on devrait pouvoir obtenir jusqu'à 5 g environ de vanilline pour 100 g de matière sèche au lieu des 2 à 3 g habituels. Ceci est vraisemblablement dû à une décomposition enzymatique ou microbienne de la vanilline au fur et à mesure de sa formation, avec notamment formation d'acide vanillique.

Un procédé d'extraction d'arôme de vanille à partir de gousses de vanille à l'aide de dioxyde de carbone à température comprise entre 10 et 30°C et à une pression comprise entre 80 et 350 bars, suivie de la séparation de l'extrait à une température comprise entre 0 et 30°C et une pression de 30 à 60 bars, est décrit dans la demande EP 075 134.

Le procédé selon l'invention permet d'obtenir au moins 80% de la vanilline escomptée, sur la base de la quantité de précurseur présent dans les gousses vertes à la cueillette, à côté des autres constituants de l'arôme naturel de vanille en proportions plus ou moins modifiées, après un traitement très court, dont la dernière étape peut être mise en oeuvre à un moment quelconque après la récolte pour satisfaire les besoins du marché.

Le procédé selon l'invention comprend la congélation des gousses vertes matures de vanille, à une température comprise entre -5°C et -30°C, de préférence entre -15°C et -20°C, suivie de leur réchauffement avant d'extraire l'arôme de façon classique, par un solvant.

Les gousses peuvent être congelées dès la récolte ou plusieurs jours après, si elles sont conservées dans un endroit sec et ventilé. La durée de la congélation n'a que peu d'influence sur le rendement final en vanilline ; elle peut être d'une journée, d'une semaine ou de plusieurs mois. La vitesse de la congélation n'est pas nécessairement élevée : on a constaté qu'elle pouvait être instantanée, par introduction dans une enceinte réfrigérée, ou nettement plus lente, par diminution de la température de l'enceinte en quelques heures, sans modifications du rendement en vanilline.

La gousse congelée ne contient pratiquement pas de vanilline, celle-ci n'apparaît que lors du réchauffement de la gousse ; celui-ci peut résulter simplement du retrait des gousses de l'enceinte réfrigérée et de leur maintien à l'air à température ambiante quelques heures ou les gousses congelées peuvent être introduites dans une enceinte dont la température est comprise entre la température ambiante, soit 20°C environ, et 60°C et de préférence vers 40°C pendant 2 à 4 heures. Le temps nécessaire pour que l'hydrolyse soit complète et que le rendement soit maximal, est fonction de la vitesse du réchauffement et de la température finale.

La vitesse du réchauffement dépendra notamment de la quantité de gousses introduite dans l'enceinte chaude et de la température de cette enceinte ; le spécialiste sera à même, par quelques essais préalables, de déterminer quelles sont les meilleures conditions de réchauffement pour un rendement optimal.

Il est préférable pour avoir un rendement optimal de traiter les gousses peu après leur décongélation pour

2

en extraire les composants de l'arôme de vanille ; on opère alors de façon classique, par exemple en traitant les gousses par l'éthanol, à chaud, ou par un solvant à l'état supercritique.

Dans ce qui suit on décrit des exemples de mise en oeuvre de l'invention pour des gousses de vanille récoltées aux Comores à la période habituelle de récolte, alors qu'elles sont encore vertes.

- Exemple 1 :

on a congelé à -18°C, 20 g de gousses vertes de vanille provenant des Comores, récoltées depuis 8 jours. Après quelques jours à cette température, les gousses ont été transférées dans des enceintes fermées, maintenues à des températures données pour des durées variables.

Les gousses ont été ensuite traitées avec de l'éthanol en Soxhlet pendant 12 h, pour en extraire la totalité des constituants de l'arôme et les glucosides. On a utilisé environ 200 ml d'éthanol pour 15 g de gousses. Le témoin (durée de décongélation = o) a été introduit congelé dans l'éthanol.

On a détermine par chromatographie liquide haute performance (HPLC) sur phase inverse (colonne Ultrasphère C 18 ; 5 µm) en éluant (débit = 1,2 ml/min) par un mélange d'eau et d'acétonitrile (90/10) quelles étaient les quantités de glucovanilline et vanilline extraites des gousses par l'éthanol.

Les résultats obtenus après décongélation à 25°C, 30°C, 40°C ou 50°C, figurent dans le tableau 1.

Les quantités de glucovanilline et vanilline sont exprimés en pourcentage du poids sec de la gousse.

Après traitement selon le procédé classique, les gousses de cette origine, contiennent 2 à 2,5 % de vanilline.

## TABLEAU 1

| b \ a | Glucovanilline | | | | Vanilline | | | |
|---|---|---|---|---|---|---|---|---|
| | 25°C | 30°C | 40°C | 50°C | 25°C | 30°C | 40°C | 50°C |
| 0 | 11,31 | 11,31 | 11,31 | 11,31 | 0,55 | 0,55 | 0,55 | 0,55 |
| 1h | | | 1,82 | | | | 3,84 | |
| 1h30 | 1,20 | 1,63 | 2,02 | 2,06 | 3,90 | 2,34 | 2,43 | 2,28 |
| 2h | | | 1,07 | | | | 4,27 | |
| 3h | 0,04 | 1,76 | 1,06 | 0,74 | 4,30 | 4,68 | 4,11 | 3,40 |
| 5h | | 1,03 | | | | 4,23 | | |

a : température de décongélation

b : durée de décongélation

- Exemple 2 :

On a congelé à -18°C, deux gousses, fraîches, vertes, de vanille des Comores, puis on les a maintenues 2 h 30 à 40°C dans un tube fermé.

Ces gousses ont ensuite subi une extraction éthanolique et les concentrations relatives de l'extrait en acide para-hydroxybenzoïque, acide vanillique, aldéhyde para-hydroxybenzoïque et vanilline, ont été déterminées par HPLC sur colonne BONDAPACK C 48 avec pour phase mobile : acide phosphorique $10^{-2}$ M (75 %) et méthanol (25 %), le débit étant de 1ml.min$^{-1}$, en détectant les produits par absorption ultraviolette.

Les concentrations relatives des principaux composants de ces deux extraits figurent dans le tableau 2, ainsi que celles mentionnées dans Analusis vol.15 p.217-226 (1987), obtenues pour des échantillons dont la maturation a été effectuée selon un procédé classique.

TABLEAU 2

| Origine des gousses | Gousses vertes décongelées (Comores) | Réunion et Comores | Madagascar | Tonga |
|---|---|---|---|---|
| V/P | 12,36 à 12,4 | 14,50 à 19,10 | 12,90 à 15,90 | 16,60 à 23,30 |
| V/AV | 42,7 à 46 | 23,00 à 29,10 | 14,90 à 19,30 | 14,50 à 32,40 |
| V/AP | 78,1 et 85,1 | 69,10 à 110,40 | 53,10 à 87,90 | 55,10 à 194,50 |
| AP/P | 0,15 et 0,16 | 0,149 à 0,220 | 0,169 à 0,293 | 0,092 à 0,333 |
| AV/P | 0,27 et 0,29 | 0,527 à 0,681 | 0,709 à 1,010 | 0,550 à 1,513 |

AP = acide parahydroxybenzoïque ; AV = acide vanillique
P = aldéhyde parahydroxybenzoïque ; V = vanilline

Le procédé selon l'invention et la méthode d'extraction conduisent à un extrait présentant relativement moins d'acide vanillique qu'habituellement.

- Exemple 3 :

on a congelé des gousses vertes contenant 9,2 % en poids de la matière sèche, de glucovanilline et 1 %

EP 0 354 118 B1

de vanilline, à des vitesses différentes :

a) - soit en introduisant quelques gousses dans un congélateur de type familial (volume : 50 l ; T =-18°C),

b) - soit en trempant quelques secondes les gousses dans l'azote liquide avant de les introduire dans le même type de congélateur,

c) - soit en introduisant les gousses dans une enceinte dont la température interne a été descendue en 5 heures de 20°C à -20°C avant de les introduire dans le même type de congélateur.

Dans les 3 cas, les gousses ont été décongelées par maintien 3 heures dans une enceinte à 40°C. Elles ne contiennent plus de glucovanilline ; les taux de vanilline extraite à l'éthanol, comme dans les exemples précédents, figurent dans le tableau 3.

TABLEAU 3

| congélation selon | a | | | b | c |
|---|---|---|---|---|---|
| décongélation après (jours) | 1 | 2 | 7 | 7 | 7 |
| taux de vanilline (g/100 g) | 5,22 | 4,20 | 4,69 | 5,95 | 5,61 |

**Revendications**

1. Procédé d'obtention d'un arôme vanille naturel, caractérisé en ce que les gousses vertes matures sont congelées à une température comprise entre -5°C et -30°C, puis réchauffées avant d'en extraire les constituants de l'arôme.

2. Procédé selon la revendication 1 caractérisé en ce que les gousses sont congelées entre -15°C et -20°C.

3. Procédé selon l'une des revendications 1 et 2 caractérisé en ce que les gousses congelées sont introduites pour être réchauffées dans une enceinte entre 30°C et 50°C, dans laquelle elles sont maintenues 2 à 4 heures.

**Patentansprüche**

1. Verfahren zur Gewinnung eines natürlichen Vanille-Aromas, dadurch gekennzeichnet, daß die reifen grünen Schoten bei einer Temperatur zwischen -5 °C und -30 °C eingefroren und anschließend wiedererwärmt werden, bevor ihnen die Aromastoffe entzogen werden.

2. Verfahren nach Patentanspruch 1, dadurch gekennzeichnet, daß die Schoten bei einer Temperatur von -15 °C bis - 20 °C eingefroren werden.

3. Verfahren nach einem der Patentansprüche 1 und 2, dadurch gekennzeichnet, daß die eingefrorenen Schoten zur Erwärmung in eine Hülle zwischen 30 °C und 50 °C eingeführt werden, in der sie 2 bis 4 Stunden verbleiben.

5

**Claims**

1. Process for obtaining a natural vanilla flavor, characterized in that the mature green beans are frozen at a temperature ranging between -5°C and -30°C, and then warmed up before extracting the flavor constituents therefrom.

2. Process according to claim 1, characterized in that the beans are frozen between -15°C and -20°C.

3. Process according to one of claims 1 and 2, characterized in that the frozen beans are introduced, to be warmed up, into a chamber between 30°C and 50°C in which they are maintained from 2 to 4 hours.